Europäisches Patentamt

European Patent Office

Office européen des brevets

(19)

(11) Veröffentlichungsnummer: **0 096 784**
**A1**

## EUROPÄISCHE PATENTANMELDUNG

(12)

(21) Anmeldenummer: 83105301.2

(22) Anmeldetag: 28.05.83

(51) Int. Cl.³: **B 65 G 1/04**

(30) Priorität: 11.06.82 DE 3222148

(43) Veröffentlichungstag der Anmeldung: 28.12.83
Patentblatt 83/52

(84) Benannte Vertragsstaaten: AT BE CH FR GB IT LI NL SE

(71) Anmelder: **Fischbach, Albert, Zur Gloria 34,
D-5600 Wuppertal 23 (DE)**

(72) Erfinder: **Fischbach, Albert, Zur Gloria 34,
D-5600 Wuppertal 23 (DE)**

(74) Vertreter: **Sturies, Herbert et al, Patentanwälte Dr. Ing.
Dipl. Phys. Herbert Sturies Dipl. Ing. Peter Eichler
Postfach 20 12 42, D-5600 Wuppertal 2 (DE)**

(54) Vollautomatisches Regallager.

(57) Ein vollautomatisches Regallager ist mit einer Vielzahl von neben- und hintereinander liegenden Lagerplätzen für darauf zu lagernde Güter (2) versehen. Diese können mittels sie abstützender, ferngesteuerter Fördermittel (4, 5) über eine an einer Seite der Lagerplätze entlang laufende Fahrstraße (M) zu bzw. von einer Ein- bzw. Ausgangsstation (S) verfahren werden, wobei eine zur Fahrstraße (M) quer verlaufende Ausweichstraße (m) für das gleichzeitige Verschieben aller oder mehrerer Lagergüter (2) um eine Reihenbreite vorgesehen ist, um dadurch eine zu einem bestimmten Lagerplatz führende Fahrgasse (z.B. c) freizulegen.

Um das Regallager baulich und steuerungstechnisch noch zu verbessern, insbesondere auch um kürzere Entnahme- bzw. Beschickungszeiten zu erzielen, bestehen die Fördermittel aus das Lagergut (2) im Lagerzustand tragenden, um parallel zur Ausweichstraße (m) verlaufende Achsen (4') umlaufenden Rollkörpern (4) sowie aus über deren Ebene anhebbaren, das Lagergut (2) anhebenden und über die freigelegte Fahrgasse (z.B. c) transportierenden Wälzkörpern (5). Vorteilhaft ist dabei jedem Lagerplatz ein auf den Rollkörpern (4) aufliegender Tragrahmen (1) zugeordnet, über dessen Gutauflagefläche ($1^{IV}$) hinaus die Wälzkörper (5) aufzuheben sind.

PATENTANWÄLTE    DR.-ING. DIPL.-PHYS. **H. STURIES**    0096784
                 DIPL.-ING. **P. EICHLER**

BRAHMSSTRASSE 29, 5600 WUPPERTAL 2

Albert Fischbach, Zur Gloria 34, 5600 Wuppertal 23

======================================================

## Vollautomatisches Regallager

Die Erfindung bezieht sich auf ein vollautomatisches Regallager mit einer Vielzahl von in einer Ebene reihenweise neben- und hintereinanderliegenden Lagerplätzen für darauf selektiv zu lagernde Güter, die mittels sie abstützender, ferngesteuerter Fördermittel von und zu einer Ein- bzw. Ausgangsstation zu verfahren sind, der eine an einer Seite der Lagerplätze entlang laufende, vom Lagergut normalerweise frei zu haltende Fahrstraße zugeordnet ist, und wobei weiterhin eine quer zu letzterer verlaufende Ausweichstraße für das gleichzeitige seitliche Verschieben aller oder mehrerer Lagergüter um eine Reihenbreite zwecks Freilegung einer zu einem bestimmten Lagerplatz führenden, parallel zur Ausweichstraße verlaufenden Fahrgasse vorgesehen ist.

Ein vollautomatisches Regallager der vorerwähnten Gattung ist in der älteren deutschen Patentanmeldung P 32 05 961.2 beschrieben und dargestellt. Dabei geht es zwar insbesondere um das Parken von Kraftfahrzeugen, jedoch auch um das platzsparende Aufbewahren von Gütern schlechthin. Bei dieser älteren Vorrichtung ist jedem Lagerplatz eine das Aufbewahrungs- bzw. Lagergut aufnehmende Palette zugeordnet, die zum Be- und Entladen mittels auf kreuzweise verlaufenden Schienen laufender Räder und ferngesteuerter Antriebsmittel jeweils zwischen ihrem bestimmungsgemäßen Lagerplatz und der Ein- bzw. Ausgangsstation zu verfahren sind. Das ist noch etwas umständlich und zeitraubend, weil die einzelnen Paletten dabei jeweils erhebliche Fahrstrecken zurückzulegen haben, zumal zur Aufrechterhaltung der Lagerordnung jede Palette dabei stets doppelt, nämlich jeweils hin und zurück bewegt werden muß. Auch erfordert das zum Transport der einzelnen Paletten notwendige, sich kreuzende Schienen-System sowie seine Fernsteuerung einen nicht unerheblichen Aufwand an baulichen und steuerungstechnischen Mitteln.

Demgegenüber liegt der Erfindung die Aufgabe zugrunde, ein vollautomatischen Regallager der eingangs erwähnten Gattung dahingehend zu verbessern und zu vervollkommenen, daß es unter Beibehalt seiner großen platzsparenden Lagerkapazität von noch einfacherer Bauart ist, leichter gesteuert werden kann und vor allem auch kürzere Be- und Entladungszeiten für die einzelnen Lagergüter zu erzielen erlaubt. Diese Aufgabe wird ausgehend von einem Regallager der eingangs erwähnten Gattung erfindungsgemäß dadurch gelöst, daß die Fördermittel einerseits aus das Fördergut im Lagerzustand tragenden, um parallel zur Ausweichstraße verlaufende Achsen umlaufenden Rollkörpern und andererseits

aus über die Ebene der Rollkörper anhebbaren, das darüber gelegene Lagergut anhebenden und über die freigelegte Fahrgasse transportierenden Wälzkörpern bestehen, die um parallel zur Fahrstraße gelegene Achsen rotieren. Über die vorerwähnten Roll- und Wälzkörper kann das von ihnen abgestützte Lagergut bei entsprechend einfacher Fernsteuerung schneller und leichter an seinen bestimmungsgemäßen Lagerplatz gebracht bzw. davon entnommen und zur Ausgabestation verfahren werden, ohne daß dabei entsprechend lange Fahrwege zurücklegen müssende Paletten verwendet werden.

Nach einem weiteren wesentlichen Merkmal der Erfindung ist es von Vorteil, jedem Lagerplatz einen mit dem Lagergut selektiv zu beladenden Tragrahmen zuzuordnen, der auf den Rollkörpern aufliegt, wobei die Wälzkörper durch die Tragrahmen hindurch über dessen Gutauflagefläche hinaus anhebbar sind. Die Tragrahmen treten hier gleichsam an die Stelle der bei dem älteren Regallager vorhandenen Paletten, unterscheiden sich aber von letzteren insofern äußerst vorteilhaft, als sie nicht mehr die gesamte Wegstrecke zwischen Ein- bzw. Ausgangsstation und zugeordnetem Lagerplatz zurücklegen müssen, sondern lediglich nur noch zum Öffnen der betreffenden Fahrgasse um eine Lageplatzbreite seitlich verschoben zu werden brauchen. Die Tragrahmen sind hier also lediglich zur Abstützung des Lagergutes im Ruhezustand und für das das Freilegen der jeweiligen Fahrgasse notwendige Verschieben der entsprechenden Lagergüter bzw. der sie abstützenden Tragrahmen um eine Lagerplatzbreite notwendig, während das zum Be- und Entladen des Lagergutes notwendige Verfahren allein über die in Richtung der frei-gelegten Fahrgasse hintereinander gelegenen Wälzkörper erfolgt, wobei es sich jeweils um einfache, also keinen Rücktransport von Paletten oder Tragrahmen erfordernde Fahrbewegungen des betreffenden Lagergutes handelt, die entsprechend zeitsparend durchgeführt werden können. Auch ist die Steuerung der Transportrahmen und der das betreffende Lagergut fördernden Wälzkörper mit verhältnismäßig einfachen Mitteln durchzuführen.

Es empfiehlt sich, zwischen den jeweils zu einer quer zur Ausweichstraße verlaufenden Reihe gehörenden Tragrahmen Kupplungen vorzusehen, die durch ferngesteuerte Betätigungsglieder zu betätigen sind, und diese Tragrahmen durch inbesondere an den der Ausweichstraße benachbarten Tragrahmen angreifende Antriebsmittel gemeinsam zu verschieben. Letzteres kann auf verhältnismäßig einfache Weise durch hydraulische oder pneumatische Mittel erfolgen.

Nach einem weiteren Merkmal der Erfindung können die Antriebs bzw. Hubmittel für mehrere benachbarte Tragrahmenreihen bzw. Wälzkörper blockweise zusammengefaßt sein. Dadurch wird die Fernsteuerung sowohl der Wälzkörper als auch der zwischen den Tragrahmen jeder Reihe vorhandenen Kupplungen noch einfacher.

Schließlich sieht die Erfindung noch vor, daß mehrere solcher Regale etagenförmig übereinander zu einem Hochregallager angeordnet werden können. Das ergibt eine außerordentlich platzsparende Aufbewahrungsmöglichkeit zahlreicher Güter bei zugleich wesentlicher Verkürzung der Be-und Entladezeiten des Hochregallagers. Im Gegensatz zu den bekannten Hochregallagern mit je einer zwischen zwei übereinander liegenden Regalreihen angeordneten Fahrstraße und darin verkehrenden Gabelstaplern können die Lagerplätze ohne solche ständig vorhandenen Fahrstraßen unmittelbar nebeneinander angeordnet und die Gabelstapler beseitigt oder aber zumindest zahlenmäßig reduziert werden. Dabei empfiehlt es sich, die Fahrstraßen der einzelnen Regaletagen übereinander anzuordnen und sie zum vorübergehenden Abstellen von mittels Gabelstaplern heran bzw. wegzuzuförderndem Lagergut zu verwenden. Das ermöglicht eine sehr zweckmäßige und zeitsparende Beschickung bzw. Entleerung solcher Hochregallager mittels nur weniger, allein an der Vorderseite des Hochregallagers verkehrender Gabelstapler.

In der Zeichnung ist ein vorteilhaftes Ausführungsbeispiel eines vollautomatischen Hochregallagers nach der Erfindung schematisch dargestellt. Dabei zeigt

Fig. 1 die Draufsicht auf eine Etage des Regallagers in vollem Beladungszustand,

Fig. 2 eine vergrößerte Teildraufsicht auf das Regallager ohne Tragrahmen-Beladung,

Fig. 3 einen Schnitt nach der Linie III-III und

Fig. 4 einen Schnitt nach der Linie IV-IV jeweils der Fig. 2.

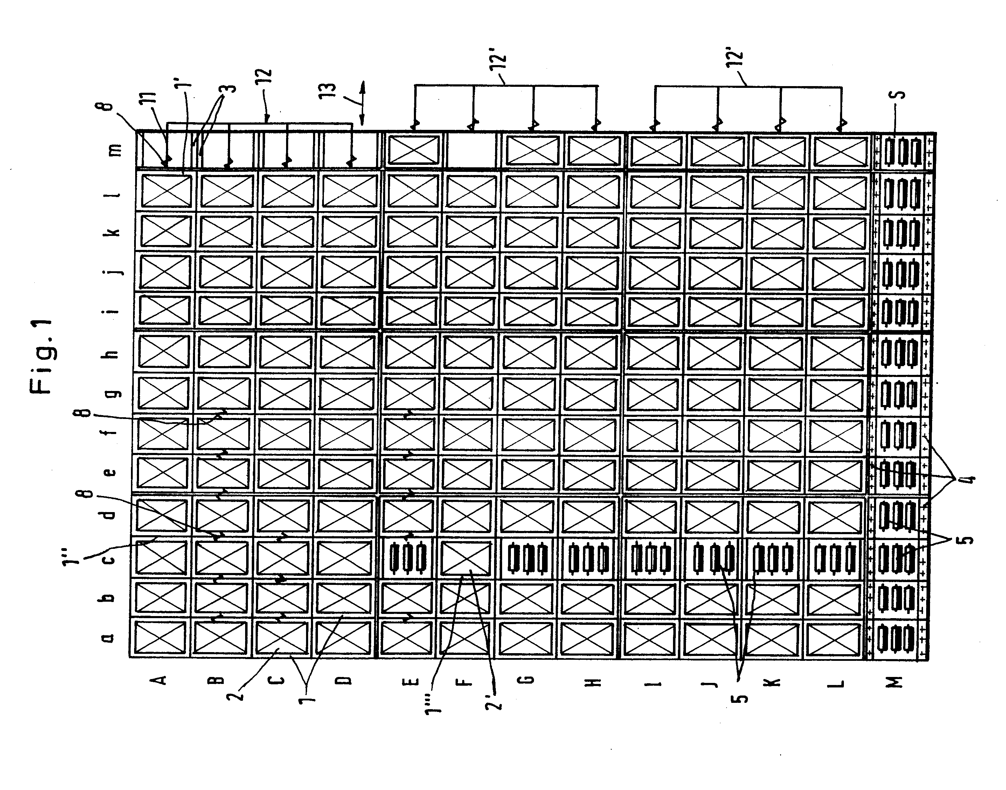

Das in Fig. 1 dargestellte Regallager besitzt eine Vielzahl von in einer Ebene reihenweise neben- und hintereinander liegenden Lagerplätzen, deren Reihenzeilen mit Großbuchstaben A bis L und deren Reihenspalten mit Kleinbuchstaben a bis l bezeichnet sind. Insgesamt besitzt dieses Regallager in einer Etage somit 12 X 12 = 144 an verschiedenen Stellen gelegene Lagerplätze, die eine selektive Lagerung verschiedenartigster oder auch gleicher Güter auf

- 6 -

engstmöglichen, Raum ermöglichen. Jedem dieser 144 verschiedenen Lagerplätze A a bis L l ist je ein Tragrahmen 1 zugeordnet, der zur selektiven Lagerung bzw. Abstützung des darauf aufliegenden, jeweils durch ein Kreuz gekennzeichneten Lagerguts 2 dient. Die betreffenden Güter können dabei entweder direkt auf den Tragrahmen 1 abgestellt oder aber in üblichen Behältern aus Kunststoff oder dergleichen untergebracht sein, die dann ihrerseits auf dem Tragrahmen aufliegen. Die untere Reihe M des Regallagers dient als Fahrstraße für das über die Ein- bzw. Ausgangsstation S aufzugebende bzw. zu entnehmende Lagergut, während die rechts vorhandene Reihenspalte m als Ausweichstraße für das gleichzeitige seitliche Verschieben aller oder mehrerer Lagergüter 2 um eine Reihenbreite dient, damit eine zu einem bestimmten Lagerplatz, z.B. Fc führende, parallel zur Ausweichstraße m verlaufende Fahrgasse c freigelegt werden kann. Über die Fahrgasse c kann das Lagergut Fc in weiter unten noch zu beschreibender Weise transportiert werden.

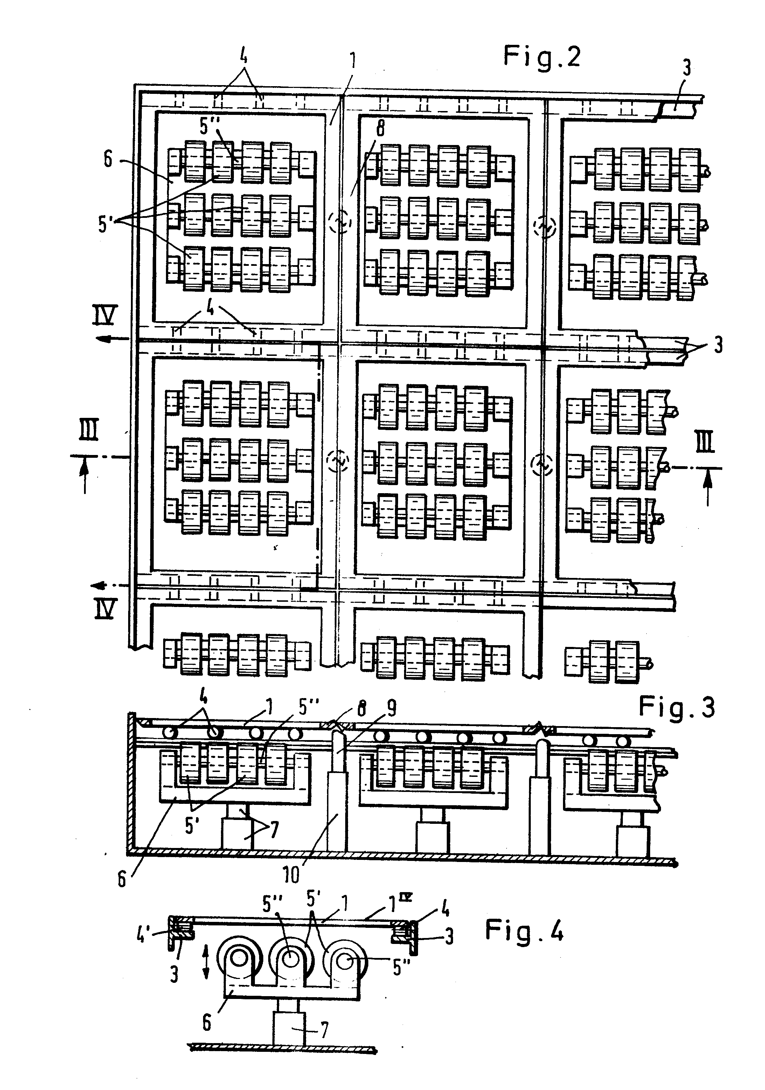

Das Regallager besitzt ein entsprechendes Lagergestell, von dem im vorliegenden Zusammenhang eigentlich nur die Tförmigen Querträger 3 interessieren, weil auf ihnen die die Tragrahmen 1 abstützendem Rollkörper 4 laufen, die um parallel zur Ausweichstraße m verlaufende Achsen 4' rotieren. Mittels dieser, insbesondere aus den Fig. 2 bis 4 hervorgehenden Rollkörper 4 können daher die auf ihnen lagernden Tragrahmen 1 jeweils um eine Lagerplatzbreite hin und her verschoben werden. Weitere Bewegungen brauchen die Tragrahmen 1 nicht auszuführen.

Weiterhin befinden sich unter jedem Lagerplatz die generell als Wälzkörper bezeichneten Förderrollen 5, die um parallel zur Fahrstraße M gelegene Achsen 5'' rotieren und über die Gutauflagefläche $1^{IV}$ der Tragrahmen 1 hinaus anhebbar sind (Fig. 4). Dadurch können diese Wälzkörper 5 bei ihrem Hochfahren das auf dem Tragrahmen 1 aufliegende Lagergut anheben und es über die jeweils freigelegte Fahrgasse, z.B. c transportieren.

Die Wälzkörper 5 können, wie insbesondere die Fig. 2 bis 4 zeigen, als Förderrollen 5' ausgebildet sein, die jeweils zu mehreren auf einer gemeinsamen Welle 5'' sitzen. Mehrere solcher mit Förderrollen 5' bestückter Wellen 5'' können auf einer gemeinsamen Tragplatte 6 angeordnet sein, die z. B. über ein hydraulisch zu beaufschlagendes Zylinderkolbenaggregat 7 höhenverstellbar ist. Dadurch kommt es zu einer blockweisen Zusammenfassung jeweils mehrerer solcher Förderrollen bzw. Wälzkörper 5 und ihrer gemeinsamen Steuerung. Es versteht sich, daß diese Förderrollen 5 bzw. Wälzkörper einzeln oder zu mehreren gemeinsam angetrieben werden können. Es empfiehlt sich, die Wälzkörper 5 mit einer aus Gummi oder dergleichen bestehenden elastischen Bereifung zu versehen, um einerseits eine gute Mitnahmewirkung und andererseits einen geräuschdämpfenden Transport des darüberlaufenden Lagerguts zu erzielen. Weiterhin empfiehlt es sich, die jeweils äußeren Wälzkörper bzw. Förderrollen 5' eines solchen Wälzkörpersatzes im Durchmesser größer als die inneren Förderrollen 5' zu halten und erstere nach innen schräg abzustufen, um auf diese Weise das darüber zu fördernde Lagergut jeweils zur Mitte der Fahrstraße hin zentrieren zu können.

Für das jeweilige Verschieben der Tragrahmen 1 sind die Tragrahmen jeder Reihenzeile durch ausrückbare Kupplungen 8 miteinander verbunden. Diese Kupplungen 8 können durch ferngesteuerte Betätigungsglieder ausgerückt bzw. betätigt werden, beispielsweise durch die elektromagnetisch anzuhebenden Teleskopkolben 9 der entsprechend angeordneten Steuerungszylinder 10. Entsprechende Kupplungen 8 und Steueraggregate 9, 10 sind auch zwischen den jeweils der Ausweichstraße m benachbarten Tragrahmen 1' und den daran angreifenden Zug- und Druckstangen 11 einer generell mit 12 bezeichneten Antriebseinrichtung vorhanden, die jeweils das Verschieben von in einer Reihenzeile nebeneinander liegenden und miteinander gekuppelten Tragrahmen 1 um eine Lagerplatzbreite ermöglicht. Hierzu kann die Antriebseinrichtung 12 aus einer hydraulischen oder pneumatisch zu beaufschlagenden Kolben-Zylinder-Einheit bestehen, die einen entsprechenden Verschiebehub in der eingezeichneten Pfeilrichtung 13 besitzt.

Im vorliegenden Ausführungsbeispiel sind jeweils 4 x 4 = 16 Lagerplätze zu Blockeinheiten zusammengefaßt. Demzufolge sind für die Verschiebung der Tragrahmen 1 um eine Lagerplatzbreite auch jeweils 4 Reihenzeilen von Tragrahmen 1 durch eine gemeinsame Antriebseinrichtung 12 und deren jeweils vier Zug- und Druckstangen 11 zu bewegen. Entsprechend sind auch die Wälzkörper 5 jeweils zu vier Reihenspalten gemeinsam antreibbar, wodurch der Steuerungsaufwand wesentlich vereinfacht wird. Diese blockweise Zusammenfassung empfiehlt sich insbesondere bei großen Regallagern, weil dann immer nur jeweils ganz bestimmte Abschnitte der Wälzkörper 5 bzw. der dadurch gebildeten Rollenstrecken angehoben und angetrieben zu werden brauchen. Da alle Steuerungselemente an den festen Teilen des Regalrahmens angebracht werden können, ist der Steuerungsaufwand entsprechend gering. Im Gegensatz zu den Wälzkörpern 5 brauchen die die Tragrahmen 1 abstützenden Rollenkörper 4 nicht angetrieben zu werden, sofern jedenfalls der diesbezügliche Querverstellantrieb auf andere Weise, z. B. über die hydraulische Antriebseinrichtung 12 erfolgt. Solche Rollkörper 4 können auch auf der Fahrstraße M angeordnet werden, um auf dieser den Quertransport des Fördergutes zu bzw. von der Aus- bzw. Eingangsstation S zu ermöglichen.

Soll ein bestimmter Behälter mit darin befindlichen Lagergut, beispielsweise von dem hinteren Standplatz Ac zur Ein- bzw. Ausgabestelle S gefördert werden, so werden dazu zunächst durch elektromagnetische Betätigung der Teleskopkolben 9 die Kupplungen 8 der quer verschiebbaren Trägerrahmen 1 an den Stellen Bbc bis Lbc ausgerückt. Als dann werden die rechts von dieser entkuppelten Spalte gelegenen Trägerrahmen 1 in den Reihenzeilen B bis L mittels der Antriebseinrichtungen 12 jeweils um eine Lagerplatzbreite seitlich verfahren. Die abgekuppelten Trägerrahmen in den Reihenspalten a, b bleiben stehen, ebenso der Trägerrahmen 1 im Feld Ac, wozu vorher entweder die Kupplung an der Stelle Acd oder an der Stelle Alm ausgerückt wurde. Sodann werden die Wälzkörper 5 der Rollenstrecke von Ac bis Mc angehoben, so daß der mit dem Lagergut versehene Behälter an der Stelle Ac von dem verschiebbaren Trägerrahmen 1'' abgehoben wird und über diesen sowie über alle vor ihm liegenden Regalträger 3 mittels der hochgefahrenen Wälzkörper 5 in der Fahrgasse c nach vorn zur Fahrstraße M verfahren werden kann. Nach Absenken der Wälzkörper 5 in der Fahrstraße M übernehmen die kleinen Rollen 4 der Fahrstraße, die um parallel zur Ausweichstraße m verlaufende Achse umlaufend anzutreiben sind, das Lagergut bzw. dessen Behälter und befördern es zur Ein- bzw. Ausgabestelle S.

Zum besseren Verständnis der blockweisen Zusammenfassung mehrerer Lagerplätze bzw. Tragrahmen und ihrer Antriebsmittel sei als Erläuterungsbeispiel angenommen, daß der auf dem Lagerplatz Fc befindliche Behälter bzw. dessen Lagergut abgerufen werden soll. In diesem Fall werden zunächst die Kupplungen der verschiebbaren Trägerrahmen 1 an den Stellen Ebc, Flm und Gbc bis Lbc ausgerückt. Daraufhin werden die Antriebseinrichtungen 12' betätigt, wodurch die angekuppelten, jeweils rechts der vorerwähnten Entkupplungsstellen gelegenen Tragrahmen um eine Lagerplatzbreite nach rechts verschoben werden, hingegen der Trägerrahmen 1''' mit dem darauf befindlichen Lagergut 2' an der Stelle Fc verbleibt, so daß er dann von den anschließend hochfahrenden Wälzkörpern 5 der Reihenspalte c erfaßt, angehoben und durch die freigelegte Fahrgasse c zur Fahrstraße M verfahren werden kann. Diese Blockschaltung wirkt sich rationalisierend und energiesparend aus. Außerdem kann der Querverschub für jeweils vier Trägerrahmenreihen von einer einzigen Hydraulikeinrichtung 12 bewirkt werden, wodurch die Anzahl der hydraulischen Anlagen auf ein günstiges Maß beschränkt werden kann. Für die Längsförderung, also in Richtung der jeweils freizulegenden Fahrgasse, ergeben sich Einsparungen dadurch, daß hier auch nur die entsprechenden Wälzkörper-Teilstrecken angetrieben zu werden brauchen, über die das Lagergut bzw. der es aufnehmende Behälter gerade hinwegläuft.

Bei Verzicht auf die verschiebbaren Trägerrahmen, bei denen also die das Lagergut aufnehmenden Behälter unmittelbar auf den in Querrichtung angeordneten, um quer zur Fahrstraße verlaufende Achsen rotierenden Rollenkörper 4 aufruhen, verhält es sich ähnlich. Diese Rollenkörper 4 brauchen in der Höhe nicht verstellbar zu sein. Wohl aber werden die dazu rechtwinklig stehenden großen Wälzkörper 5 der jeweils in Frage kommenden Rollenstrecken zum Zwecke des Längsverfahrens eines Behälters in der Höhe so verstellt, daß sie den das Lagergut aufnehmenden Behälter von den kleinen Rollen 4 abheben und in die gewünschte Richtung fördern. Auch hier kann die Blockschaltung zu entsprechenden Einsparungen führen.

Im Rahmen der vorliegenden Erfindung sind mancherlei Abwandlungen möglich. Insbesondere können mehrere der in den Figuren dargestellten Regale etagenförmig übereinander zu einem Hochregallager angeordnet werden, wobei die vorerwähnten Vorteile hinsichtlich der platzsparenden Lagerung, der einfachen Bauart, Verschiebbarkeit und Steuerung für jede Etage voll erhalten bleiben. In diesen Fällen kann es auch besonders günstig sein, die Fahrstraßen M der einzelnen Regaletagen übereinander liegend anzuordnen und sie lediglich zum vorübergehenden Abstelllen von mittels Gabelstaplern heran- bzw. wegzuförderndem Lagergut zu verwenden. In diesem Falle würden also die um parallel zur Ausweichstraße m verlaufende Achsen rotierenden kleinen Rollkörper 4 in der Fahrstraße M entfallen, so daß letztere lediglich zu einem vorübergehenden Abstellplatz für die einzugebenden bzw. zu entnehmenden Lagergüter bzw. die letztere aufnehmenden Behälter wird. Die Steuerung der einzelnen Antriebsmittel sowohl für die Querverschiebung der Tragrahmen und die Längsförderung der Lagergüter als auch für das Ein-und Ausrücken der Kupplungen 8 und das Ein- und Ausschalten der Umlaufbewegungen der Wälzkörper 5 werden zweckmäßig über elektronische Steuermittel bewirkt, wobei mit einem solchen Steuersystem zugleich auch ein elektronisch arbeitendes Anzeigesystem verbunden wird, das jeweils anzeigt, ob die einzelnen Lagerplätze mit Lagergut besetzt oder noch frei sind. Auch das Lagergut jeweils unmittelbar identifizierende Sensoren können dabei vorgesehen werden, so daß von einer zentralen Steuer- und Anzeigestelle zugleich auch zu erkennen ist, mit welcher Art von Lagergut der betreffende Lagerplatz jeweils belegt ist.

Patentansprüche

1. Vollautomatisches Regallager mit einer Vielzahl von in einer Ebene reihenweise neben und hintereinanderliegenden Lagerplätzen für darauf selektiv zu lagernde Güter, die mittels sie abstützender, ferngesteuerter Fördermittel von und zu einer Ein- bzw. Ausgangsstation zu verfahren sind, der eine an einer Seite der Lagerplätze entlang laufende, vom Lagergut normalerweise frei zu haltende Fahrstraße zugeordnet ist, und wobei weiterhin eine quer zu letzterer verlaufende Ausweichstraße für das gleichzeitige seitliche Verschieben aller oder mehrerer Lagergüter um eine Reihenbreite zwecks Freilegung einer zu einem bestimmten Lagerplatz führenden, parallel zur Ausweichstraße verlaufenden Fahrgasse vorgesehen ist, d a d u r c h  g e k e n n z e i c h n e t, daß die Fördermittel einerseits aus das Lagergut (2) im Lagerzustand tragenden, um parallel zur Ausweichstraße (m) verlaufende Achsen (4') umlaufenden Rollkörpern (4) und andererseits aus über die Ebene der Rollkörper (4) anhebbaren, das darüber gelegene Lagergut (2) anhebenden und über die freigelegte Fahrgasse (c) transportierenden Wälzkörpern (5) bestehen, die um parallel zur Fahrstraße (M) gelegene Achsen (5'') rotieren.

2. Regallager nach Anspruch 1, d a d u r c h g e k e n n z e i c h n e t, daß jedem Lagerplatz ein mit dem Lagergut (2) selektiv zu beladender Tragrahmen (1) zugeordnet ist, der auf den Rollkörpern (4) aufliegt, und daß die Wälzkörper (5) durch den Tragrahmen (1) hindurch über dessen Gutauflagefläche ($1^{IV}$) hinaus anhebbar sind.

3. Regallager nach Anspruch 2, d a d u r c h g e k e n n z e i c h n e t, daß zwischen den jeweils zu einer quer zur Ausweichstraße (m) verlaufenden Reihe gehörenden Tragrahmen (1) Kupplungen (8) vorhanden sind, die durch ferngesteuerte Betätigungsglieder (9, 10) zu betätigen sind, und daß diese Tragrahmen (1) durch insbesondere an den der Ausweichstraße (m) benachbarte Tragrahmen (1') angreifende Antriebsmittel (11, 12) gemeinsam zu verschieben sind.

4. Regallager nach Anspruch 3, d a d u r c h g e k e n n z e i c h n e t, daß die Antriebsmittel (12) für die Tragrahmen (1) und die Hubmittel (9, 10) für die Wälzkörper (5) hydraulischer oder pneumatischer Art sind.

5. Regallager nach einem der Ansprüche 2 bis 4, d a d u r c h g e k e n n z e i c h n e t, daß die Antriebs- bzw. Hubmittel (12 bzw. 9, 10) für mehrere benachbarte Tragrahmenreihen bzw. Wälzkörper (5) blockweise zusammengefaßt sind.

6. Regallager nach Anspruch 5, d a d u r c h g e k e n n z e i c h n e t, daß mehrere benachbarte Wälzlager (5) auf einer gemeinsamen höhenverstellbaren Tragplatte (6) angeordnet sind.

7. Regallager nach einem der Ansprüche 1 bis 6, d a d u r c h   g e k e n n z e i c h n e t, daß die Wälzkörper (5) mit einer aus Gummi oder dergleichen bestehenden elastischen Bereifung versehen sind.

8. Regallager nach einem der Ansprüche 1 bis 7, d a d u r c h   g e k e n n z e i c h n e t, daß die äußeren Wälzkörper (5) einen größeren Durchmesser als die inneren Wälzkörper besitzen und nach innen schräg abgestuft sind.

9. Regallager nach Anspruch 5, d a d u r c h   g e k e n n z e i c h n e t, daß zwischen den Antriebsmitteln (11) und den benachbarten Tragrahmen (1') der blockweise zusammengefaßten Tragrahmenreihen Kupplungen (8) vorgesehen sind.

10. Regal nach einem der Ansprüche 1 bis 9, d a d u r c h   g e k e n n z e i c h n e t, daß mehrere solcher Regale etagenförmig übereinander zu einem Hochregallager angeordnet sind.

11. Regal nach Anspruch 10, d a d u r c h   g e k e n n z e i c h n e t, daß die Fahrstraßen (M) der einzelnen Regaletagen übereinander angeordnet sind und zum vorübergehenden Abstellen von mittels Gabelstaplern heran- bzw. wegzuförderndem Lagergut dienen.

Fig.1

0096784

0096784

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A1 - 2 907 132 (WAGON) <br><br> -- | | B 65 G 1/04 |
| A | GB - A - 1 178 153 (BRIGHT) <br><br> ---- | | |

**RECHERCHIERTE SACHGEBIETE (Int. Cl. ³)**

B 65 G

Der vorliegende Recherchenbericht wurde für alle Patentansprüche erstellt.

| Recherchenort | Abschlußdatum der Recherche | Prüfer |
|---|---|---|
| WIEN | 22-09-1983 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03.82